(19) Europäisches Patentamt
European Patent Office
Office européen des brevets

(11) **EP 3 267 230 B1**

(12) **EUROPÄISCHE PATENTSCHRIFT**

(45) Veröffentlichungstag und Bekanntmachung des Hinweises auf die Patenterteilung:
**25.12.2019 Patentblatt 2019/52**

(51) Int Cl.:
**G02B 5/18** (2006.01)     **G01J 3/18** (2006.01)
**G01J 3/12** (2006.01)

(21) Anmeldenummer: **17179337.5**

(22) Anmeldetag: **03.07.2017**

(54) **OPTISCHE ANORDNUNG ZUR SPEKTRALEN ZERLEGUNG VON LICHT**

OPTICAL ASSEMBLY FOR THE SPECTRAL DISPERSION OF LIGHT

SYSTÈME OPTIQUE DESTINÉ À LA DÉCOMPOSITION SPECTRALE DE LA LUMIÈRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.07.2016 DE 102016112504**

(43) Veröffentlichungstag der Anmeldung:
**10.01.2018 Patentblatt 2018/02**

(73) Patentinhaber: **Fraunhofer-Gesellschaft zur Förderung der angewandten Forschung e.V.**
**80686 München (DE)**

(72) Erfinder:
• **Zeitner, Uwe Detlef**
**99423 Weimar (DE)**
• **Flügel-Paul, Thomas**
**07743 Jena (DE)**
• **Michaelis, Dirk**
**07747 Jena (DE)**
• **Harzendorf, Torsten**
**07745 Jena (DE)**

(74) Vertreter: **Epping - Hermann - Fischer Patentanwaltsgesellschaft mbH**
**Schloßschmidstraße 5**
**80639 München (DE)**

(56) Entgegenhaltungen:
**DE-A1-102012 103 443     US-A1- 2008 304 127**
**US-A1- 2015 309 220     US-B1- 8 593 732**

**Beschreibung**

Die vorliegende Anmeldung betrifft eine optische Anordnung zur spektralen Zerlegung von Licht, die ein Reflexionsbeugungsgitter enthält.

Diese Patentanmeldung beansprucht die Priorität der deutschen Patentanmeldung 10 2016 112 504.0.

Für die spektrale Zerlegung von Licht in verschiedenen Anwendungen wie zum Beispiel der Spektralanalyse oder der Manipulation von Laserpulsen werden oftmals Prismen oder Gitter verwendet.

In der Druckschrift US 2015/0309220 A1 wird eine optische Anordnung mit einem Reflexionsbeugungsgitter beschrieben, die an der Lichteinfallseite ein Prisma aufweist, durch das Licht auf das Reflexionsbeugungsgitter auftrifft.

Bei der Nutzung von Prismen wird ausgenutzt, dass der Brechungsindex n des Prismenmaterials von der Wellenlänge $\lambda$ des einfallenden Lichtes abhängig ist. Entsprechend des Brechungsgesetzes

$$n_0(\lambda) \, * \, \sin(\alpha_0) \, = \, n_1(\lambda) \, * \, \sin(\alpha_1) \qquad \qquad \text{(E1)}$$

werden unterschiedliche Wellenlängen am Übergang von einem Medium mit Brechungsindex $n_0$ in ein zweites Medium mit Brechungsindex $n_1$ unterschiedlich abgelenkt. Dabei ist $\alpha_0$ der Einfallswinkel des Lichtes auf die Grenzfläche und $\alpha_1$ der Winkel des an der Grenzfläche gebrochenen Lichtes. Die Winkel werden dabei jeweils zur Normalenrichtung der Grenzfläche gemessen.

Für den Fall, dass $n_0 > n_1$ gilt, kann das Licht bei Einfallswinkeln $\alpha_0 > \arcsin(n_1/n_0)$ nicht mehr durch die Grenzfläche hindurchtreten (es existiert keine reelle Lösung für $\alpha_1$) und das gesamte Licht wird an der Grenzfläche reflektiert. Man spricht von Totalreflexion.

Bei Nutzung von Gittern ist die spektrale Aufspaltung durch die Gittergleichungen

Transmission:

$$n_{in} \, * \, \sin(\alpha) \, - \, n_G \, * \, \sin(\beta) \, = \, -m*\lambda/p \qquad \text{(E2a)}$$

Reflexion:

$$n_{in} \, * \, \sin(\alpha) \, - \, n_{in} \, * \, \sin(\beta) \, = \, -m*\lambda/p \qquad \text{(E2b)}$$

gegeben. Dabei ist $\alpha$ der Einfallswinkel auf das Gitter im Medium mit Brechungsindex $n_{in}$, $\beta$ der Winkel des am Gitter gebeugten Lichtes im Medium mit Brechungsindex $n_G$ bzw. $n_{in}$, m ein ganzzahliger Faktor, der die Beugungsordnung bezeichnet und p die Gitterperiode. Auch hier werden die Winkel jeweils zur Normalenrichtung der Gitterfläche gemessen. Je nach Materialeigenschaften vor und hinter der Grenzfläche, die das Gitter enthält, entstehen am Gitter Beugungsordnungen in Reflexion und Transmission. Bei vorgegebenem Einfallswinkel $\alpha$, Brechungsindizes $n_{in}$ und $n_G$ sowie Wellenlänge $\lambda$ und Gitterperiode p ist die Anzahl der sich ausbreitenden Beugungsordnungen in Reflexion bzw. Transmission durch die Gesamtheit aller ganzzahligen Werte m bestimmt, für welche die Gleichungen (E2) reelle Lösungen für den Beugungswinkel $\beta$ liefern. Dies ist erfüllt solange $|[\sin(\beta)]| <= 1$, wobei Re den Realteil einer komplexen Zahl bezeichnet.

Die erreichbare spektrale Aufspaltung oder auch Dispersion ist gegeben durch den Differenzialquotienten $d\alpha_1/d\lambda$ für das Prisma bzw. $d\beta/d\lambda$ für das Gitter. Mit Gittern lassen sich typischerweise höhere Dispersionen erreichen als mit Prismen, da die Abhängigkeit der Brechzahl von der Wellenlänge für optisch transparente Materialien limitiert ist. Die Dispersion am Gitter kann bei vernachlässigbarer Materialdispersion aus der oben angegebenen Gittergleichung zu

$$|d\beta/d\lambda| \, = \, |m \, / \, [n_B*p*\cos(\beta)]| \qquad \qquad \text{(E3)}$$

abgeleitet werden, wobei $n_B = n_G$ für Transmission und $n_B = n_{in}$ für Reflexion gilt.

Höhere Dispersionen können vorteilhaft genutzt werden, um den optischen Aufbau z.B. eines Spektrometers kompakter zu gestalten. Daher nutzen viele aktuelle Anordnungen optische Gitter als dispersives Element zur spektralen Zerlegung von Licht. Aus Gleichung (E3) ist ersichtlich, dass die Dispersion steigt, je kleiner das Verhältnis p/m (Gitterperiode zu Beugungsordnung) wird.

Kommen Beugungsgitter zur spektralen Zerlegung von Licht zum Einsatz, so ist der anwendbare Spektralbereich [$\lambda_1 \ldots \lambda_2$] durch die Anwendung selbst definiert und er ist im Allgemeinen begrenzt. $\lambda_1$ und $\lambda_2$ bezeichnen jeweils die Wellenlängen des kurzwelligen bzw. langwelligen Endes, wobei $\Delta\lambda = \lambda_2 - \lambda_1$ die sogenannte Bandbreite definiert. Aus Anwendungssicht ist es besonders vorteilhaft, wenn Licht der Wellenlänge $\lambda$ bei der spektralen Zerlegung mit einem Gitter möglichst vollständig in eine einzelne Beugungsordnung m gebeugt wird, da Licht in anderen Beugungsordnungen (ungleich m) in vielen optischen Anordnungen nicht für die gewünschte Anwendung nutzbar ist, und somit die Gesamteffizienz des optischen Systems verringert. Dies wird durch die Beugungseffizienz $\eta_m$ der m-ten Beugungsordnung ausgedrückt, die durch

$$\eta_m^{\overline{TM}^{TE}}(\lambda) \; = \; L_m^{\overline{TM}^{TE}}(\lambda)/Lo(\lambda) \qquad\qquad (E4)$$

gegeben ist. Dabei ist $L_0$ die auf das Gitter einfallende Lichtleistung und $L_m^{TE/TM}$ die in die m-te Beugungsordnung gebeugte Lichtleistung. Diese Beugungseffizienz ist i.A. abhängig von der Geometrie des Gitters und von der Wellenlänge als auch von der Polarisationsrichtung (TE bzw. TM) des einfallenden Lichtes abhängig. TE- bzw. TM-Polarisation bezeichnet hierbei elektrisch linear polarisiertes Licht, welches senkrecht bzw. parallel zur Einfallsebene polarisiert ist. Der Polarisationsgrad G wird im Allgemeinen durch das folgende Verhältnis definiert.

$$G(\lambda) = \left| \frac{\eta_m^{TE} - \eta_m^{TM}}{\eta_m^{TE} + \eta_m^{TM}} \right| \qquad\qquad (E5)$$

Ist G = 0 so spricht man von Polarisationsunabhängigkeit. Der Maximalwert von G beträgt 1 (100%). Bezugnehmend auf die erzielbare Beugungseffizienz $\eta_m$ sowie den Polarisationsgrad G bleibt festzuhalten, dass viele spektroskopische Anwendungen einen verschwindenden Polarisationsgrad sowie eine möglichst hohe mittlere Beugungseffizienz $\langle \eta_m \rangle = (\eta_m^{TE} + \eta_m^{TM})/2$ fordern.

Je nach Anwendung unterscheidet man grundsätzlich zwischen Reflexionsgittern (einfallendes Licht wird reflektiert) oder Transmissionsgittern (einfallendes Licht wird durch das Gitter transmittiert), um den Lichtweg der eigentlichen Signal- bzw. Nutzordnung zu beschreiben. Transmissionsgitter sind somit auf ein transparentes Substratmaterial angewiesen. Bei Reflexionsgittern wird der erforderliche hohe Reflexionsgrad meist durch metallische Schichten und/oder Substrate erzielt. Außerdem kommen hier auch dielektrische Schichtsysteme, sog. Bragg-Schichten, zum Einsatz, welche sich direkt unterhalb des eigentlichen Gitters - auf der lichtabgewandten Seite - befinden. Solange das einfallende Licht aus Luft bzw. Vakuum ($n_{in}$ =1) einfällt, muss im Falle von Reflexionsgittern kein optisch transparentes Substratmaterial genutzt werden. Ein Spezialfall stellen sog. Immersionsgitter dar, bei denen das einfallende Licht nicht in Luft, sondern durch das Substratmaterial mit Brechungsindex $n_{in} > n_G$ einfällt. In diesem Fall kann eine effiziente Reflexion auch durch Totalreflexion erzielt werden. Hierbei ist der Einsatz von zusätzlichen metallischen Schichten und/oder dielektrischen Schichtensystemen nicht notwendig, um einen hohen Reflexionsgrad zu erzielen.

Unabhängig von der Unterscheidung in Reflexions- und Transmissionsgitter, kommen für beide Typen ähnliche Geometrien zum Einsatz um eine möglichst hohe Beugungseffizienz $\langle \eta_m \rangle$ (in Reflexion oder Transmission) zu erzielen. Man unterscheidet zwischen binären Gitterstrukturen (p $\lesssim$ A), welche meist in $\pm 1$. Ordnung betrieben werden und Blaze-Gittern (p > $\lambda$), welche eine lineare Variation der Gitterstrukturelemente aufweisen. Sogenannte Echellegitter und Echelettegitter stellen hierbei einen Spezialfall von Blazegittern dar. Diese zeichnen sich zwar durch ein großes Verhältnis von Gitterperiode zu Wellenlänge p / $\lambda$ aus, werden aber zumeist in sehr hohen Beugungsordnungen betrieben, um eine hohe Winkeldispersion gemäß Gleichung (E3) zu erzielen.

Die Besonderheit hierbei besteht darin, dass eine effiziente Beugung in mehrere, sich überlagernde Beugungsordnungen erzielt wird.

Um eine hohe Effizienz der Lichtablenkung in möglichst nur eine Beugungsordnung zu erreichen, ist es vorteilhaft, die Anzahl der ausbreitungsfähigen Beugungsordnungen nach Gleichung (E2) weitest möglich einzuschränken. Das kann erreicht werden, wenn das Licht auf die Gitterfläche aus einem Material mit Brechungsindex $n_{in}$ trifft, der größer ist als der Brechungsindex $n_G$ des Materials, welches sich im homogenen Medium hinter dem Gitter befindet. Dies entspricht den schon oben genannten Immersionsgittern. Wird weiterhin für $n_{in} > n_G$ der Einfallswinkel $\alpha$ entsprechend

$$\sin(\alpha) > n_G/n_{in} \qquad\qquad (E6)$$

gewählt, so existiert keine transmittierte Beugungsordnung mit m ≥ 0 im Medium mit $n_G$. Wird weiterhin die Gitterperiode so gewählt, dass

$$p < \lambda / [n_{in}*\sin(\alpha) + n_G] \qquad\qquad (E7)$$

gilt, so existiert auch keine weitere Beugungsordnung mit m < 0 und α > 0 in Transmission, d.h. das auf die vom Gitter gebildete Grenzfläche fallende Licht wird vollständig reflektiert. In diesem Fall kann die Profilform des Gitters so gewählt werden, dass das Licht mit sehr hoher Effizienz zumindest für eine Polarisationsrichtung in die reflektierte Beugungsordnung mit m = -1 gebeugt wird. Diese Effizienz kann dabei nahe 100% liegen. Bei der Bedingung nach Gleichung (E6) erhält man Gitter mit einer sehr kleinen Gitterperiode p < λ, und dementsprechend nach Gleichung (E3) eine hohe Dispersion.

Problematisch für die Anwendung hochdispersiver Gitter, wie sie z.B. durch die Bedingungen (E5) und (E6) beschrieben werden, ist die resultierende Nichtlinearität der Dispersion. Bei gegebener Bandbreite Δλ des zu zerlegenden Spektrums steigt die Nichtlinearität der Dispersion über das Spektrum mit zunehmendem Beugungswinkel. Dies ist zunächst unabhängig von der konkreten Gittergeometrie. Besonders problematisch ist dies für die Nutzung in Spektrometern, da man hier im Allgemeinen eine gleichmäßige (äquidistante) Wellenlängenaufspaltung über die spektrale Bandbreite auf dem Detektor benötigt. Dies ist durch die Nutzung von pixelierten Detektoren mit gleichmäßigem Pixelraster begründet. Die Nichtlinearität führt dazu, dass man am kurzwelligen Ende des spektralen Bereiches einen deutlich kleineren Abstand der Wellenlängen auf benachbarten Detektorpixeln erhält, als am langwelligen Ende des Spektrums. Diese Nichtlinearität der Dispersion wird auch als Anamorphosis A bezeichnet und ist durch das Verhältnis der Dispersionen an den beiden Enden des spektralen Bereiches $[\lambda_1 .. \lambda_2]$ entsprechend

$$A = (d\beta/d\lambda)_{\lambda 2} / (d\beta/d\lambda)_{\lambda 1} \qquad\qquad (E8)$$

gegeben.

Für die sich im Gitter ausbreitenden Eigenmoden lassen sich die Quadrate der effektiven Modenindizes $K_1 = M_1{}^*M_1$ und $K_2 = M_2{}^*M_2$ wie folgt abschätzen:

$$K_1 = -\left(\frac{\lambda}{2p}\right)^2 + \frac{2}{p}\int_{-p/2}^{+p/2}\varepsilon(x)\cos^2\left(\frac{\pi}{p}\left[x-\tilde{x}\right]\right)dx$$

$$K_2 = -\left(\frac{\lambda}{2p}\right)^2 + \frac{2}{p}\int_{-p/2}^{+p/2}\varepsilon(x)\sin^2\left(\frac{\pi}{p}\left[x-\tilde{x}\right]\right)dx \qquad\qquad (E9)$$

wobei die Zentrumsposition $\tilde{x}$ sich beim Minimalwert des Betrags des gleitenden ersten Moments

$$F(\tilde{x}) = \min_y[F(y)] \text{ mit } F(y) = \left|\int_{y-p/2}^{y+p/2}\varepsilon(x)(x-y)dx\right|$$

ergibt.

In Gleichung (E9) ist x die Koordinate in der Gitterebene senkrecht zu den Gitterstegen und ε(x) die entsprechend mit der Periode p modulierte Dielektrizitätskonstante des Gittermaterials, wobei $\varepsilon = n^2$ gilt.

Im Falle von einfachen binären Gittern mit einem Gittersteg in der Elementarzelle kann Gleichung (E9) explizit berechnet werden und ergibt:

$$K_1 = -\left(\frac{\lambda}{2p}\right)^2 + \left[\varepsilon_{\text{graben}} + f\Delta\varepsilon + \Delta\varepsilon\,\frac{\sin(\pi f)}{\pi}\right]$$

$$K_2 = -\left(\frac{\lambda}{2p}\right)^2 + \left[\varepsilon_{\text{graben}} + f\Delta\varepsilon - \Delta\varepsilon\,\frac{\sin(\pi f)}{\pi}\right]$$

$$(E10)$$

Hierbei bezeichnen $\varepsilon_{\text{graben}}$ bzw. $\varepsilon_{\text{steg}}$ die Dielektrizitätskonstanten des Graben- sowie des Stegmaterials, wobei gilt $\varepsilon = n^2$. Der Füllfaktor f ist durch das Verhältnis von Stegbreite w zu Gitterperiode p gegeben, also f = w/p. Außerdem gilt $\Delta\varepsilon = \varepsilon_{\text{steg}} - \varepsilon_{\text{graben}}$.

Immersionsgitter, welche den Bedingungen (E6) und (E7) genügen, zeichnen sich zusammenfassend insbesondere durch folgende Eigenschaften aus: Die Gitter werden direkt im Substratmaterial realisiert, welches sich durch einen typischen Brechungsindex von $n_{in} < 1{,}5$ auszeichnet. Die Stege des Gitters bestehen demzufolge aus dem entsprechenden Substratmaterial und die Gräben des Gitters bestehen aus Luft. Folglich kann abgeleitet werden, dass die Differenz der Quadrate der effektiven Modenindizes $\Delta K$ der beiden fundamentalen Gittermoden auf einen Maximalwert von $\sim 3/\pi$ (bei einem Füllfaktor von 1/2) begrenzt ist (siehe Gleichungen (E9)). Folglich unterscheiden sich auch die Differenzen $\Delta M$ in den Modenindizes wenig; jeweils gültig für beide Polarisationsrichtungen TE und TM. Hohe und polarisationsunabhängige Beugungseffizienzen verlangen folglich nach sehr tiefen Gittern. Technologisch gesehen sind tiefe Gitterstrukturen auch durch hohe Aspektverhältnisse gekennzeichnet, was die Herstellbarkeit beeinträchtigt. Physikalisch gesehen zeichnen sich tiefe Gitterstrukturen auch durch eine schmalbandige Effizienzkurve aus. Die Beugungseffizienz fällt in erster Näherung mit einem Gradienten proportional der Gittertiefe L vom Maximalwert wieder ab.

Zusammenfassend kann also festgestellt werden, dass bisherige hochdispersive Immersionsgitter Defizite in Bezug auf Polarisationsunabhängigkeit, spektrale Breitbandigkeit und Herstellungsaufwand aufweisen.

Eine zu lösende Aufgabe besteht somit darin, eine optische Anordnung zur spektralen Zerlegung von Licht anzugeben, die sowohl eine hohe Winkeldispersion realisiert, als auch eine sehr hohe und polarisationsunabhängige Beugungseffizienz aufweist.

Diese Aufgabe wird durch eine optische Anordnung gemäß dem unabhängigen Patentanspruch gelöst. Vorteilhafte Ausgestaltungen und Weiterbildungen der Erfindung sind Gegenstand der abhängigen Patentansprüche.

Die optische Anordnung ist zur spektralen Zerlegung von Licht mit Wellenlängen $\lambda$ aus einem Spektralbereich $\lambda_1 \leq \lambda \leq \lambda_2$ vorgesehen. Der Spektralbereich $[\lambda_1 .. \lambda_2]$ kann abhängig von dem Anwendungsgebiet der optischen Anordnung beispielsweise Wellenlängen aus dem sichtbaren Spektralbereich, aus dem UV-Bereich und/oder aus dem IR-Bereich umfassen.

Die optische Anordnung umfasst ein Reflexionsbeugungsgitter, wobei an einer Lichteinfallsseite des Reflexionsbeugungsgitters ein erstes Medium mit einem Brechungsindex $n_{in}$ angeordnet ist, und an einer der Lichteinfallsseite abgewandten Seite des Reflexionsbeugungsgitters ein zweites Medium mit einem Brechungsindex $n_G$ angeordnet ist, wobei $n_{in} > n_G$ ist. Das Reflexionsbeugungsgitter ist auf ein Prisma aufgebracht. Das erste Medium mit dem Brechungsindex $n_{in}$ ist das Material des Prismas, beispielsweise ein Glas. Das zweite Medium an einer der Lichteinfallsseite abgewandten Seite ist vorzugsweise das Umgebungsmedium wie zum Beispiel Luft oder Vakuum. In diesem Fall beträgt $n_G$ etwa 1.

Die optische Anordnung ist so aufgebaut, dass Licht unter einem Einfallswinkel $\alpha$ aus dem ersten Medium auf das Reflexionsbeugungsgitter auftrifft, wobei die Bedingung $\sin(\alpha) > n_G/n_{in}$ erfüllt ist.

Das Reflexionsbeugungsgitter weist ein Schichtsystem mit mindestens einer unstrukturierten Schicht und mindestens einer strukturierten Schicht auf, wobei die mindestens eine strukturierte Schicht in lateraler Richtung eine periodische Struktur mit einer Periode p aufweist, und wobei die Periode p zum einen die Bedingung $p < \lambda / [n_{in}*\sin(\alpha) + n_G]$ erfüllt. In diesem Fall tritt vorteilhaft keine Beugungsordnung in Transmission auf. Weiter erfüllt die Periode p die Bedingung

$$p > \lambda \;/\; [n_{in} * \sin(\alpha) + n_{in}]. \qquad\qquad (E11)$$

In diesem Fall tritt nur die 0. und -1. Beugungsordnung in Reflexion auf. Das Reflexionsbeugungsgitter mit diesen Eigenschaften zeichnet sich insbesondere durch eine hohe Beugungseffizienz aus.

Es ist möglich, dass das Reflexionsbeugungsgitter mehrere strukturierte Schichten aufweist, die nicht notwendigerweise die gleiche Periode p aufweisen müssen. Wenn beispielsweise das Reflexionsbeugungsgitter mehrere periodische Schichten mit Perioden $p_j$ aufweist, wobei j ein Schichtindex ist, müssen die genannten Bedingungen für die Periode für mindestens eine der Perioden $p_j$ erfüllt sein.

Die mindestens eine strukturierte Schicht, welche die Periode p aufweist, ist an der der Lichteinfallsseite abgewandten Seite des Reflexionsbeugungsgitters angeordnet.

Das Reflexionsbeugungsgitter kann bei einer Ausgestaltung mehrere strukturierte Schichten aufweisen. In diesem Fall sind vorzugsweise alle strukturierten Schichten an der der Lichteinfallsseite abgewandten Seite angeordnet. In diesem Fall ist vorteilhaft zwischen keiner der strukturierten Schichten und der der Lichteinfallsseite abgewandten Seite eine unstrukturierte Schicht angeordnet.

Bei einer bevorzugten Ausgestaltung ist mindestens eine der folgenden drei Bedingungen a), b) oder c) für die Quadrate der effektiven Modenindizes $K_1 = M_1 {}^* M_1$ und $K_2 = M_2 {}^* M_2$ (siehe Gleichungen (E9)) für die mindestens eine strukturierte Schicht erfüllt:

a) $K_1 \leq 0$ und $K_2 > 0$
b) $K_2 \leq 0$ und $K_1 > 0$
c) $K_2 \leq 0$ und $K_1 \leq 0$

Es hat sich herausgestellt, dass Lösungen mit geringer Gittertiefe und hoher Bandbreite der Beugungseffizienz gefunden werden können, wenn die Größen $K_1 = M_1 {}^* M_1$ und $K_2 = M_2 {}^* M_2$ (siehe Gleichungen (E9)) der sich im Gitter ausbreitenden Eigenmoden unterschiedliche Vorzeichen aufweisen, also $K_1 < 0$ und $K_2 > 0$ gilt, bzw. umgekehrt. Des weiteren sollte die Eigenmode mit einem positiven K-Wert einen vorzugsweise großen Betrag aufweisen.

Gemäß einer vorteilhaften Ausgestaltung besteht das Reflexionsbeugungsgitter aus zwei Schichten, von denen eine Schicht strukturiert und die andere Schicht unstrukturiert ist. In diesem Fall ist die unstrukturierte Schicht vorteilhaft an der Lichteinfallsseite und die strukturierte Schicht an der der Lichteinfallsseite abgewandten Seite angeordnet.

Die strukturierte Schicht weist vorzugsweise ein periodisches Gitterprofil auf, das zwei Höhenstufen aufweist. Anders ausgedrückt weist die strukturierte Schicht ein binäres Höhenprofil auf. Die periodische Struktur der strukturierten Schicht kann insbesondere Gitterstege mit einem Brechungsindex $n_S$ und Gittergräben aufweisen, wobei die Gittergräben Luft oder Vakuum aufweisen. Die Oberflächen der Gitterstege und die Bodenflächen der Gittergräben bilden in diesem Fall die zwei Höhenstufen des Gitterprofils aus. Besonders bevorzugt sind die Gitterstege und die unstrukturierte Schicht aus dem gleichen Material mit einem Brechungsindex $n_2 = n_S > n_{in}$ gebildet.

Die optische Anordnung weist ein Prisma auf, wobei das Reflexionsbeugungsgitter an oder auf dem Prisma angeordnet ist. Das erste Medium, d.h. das Medium an der Lichteinfallsseite des Reflexionsbeugungsgitters, ist in diesem Fall durch das Prisma gebildet.

Das Prisma weist eine erste Fläche, eine zweite Fläche und eine dritte Fläche auf, wobei die erste Fläche des Prismas als Lichteintrittsfläche vorgesehen ist. Die zweite Fläche des Prismas ist zur Reflexion von einfallendem Licht zur dritten Fläche vorgesehen, wobei an der dritten Fläche das Reflexionsbeugungsgitter zur spektralen Zerlegung des einfallenden Lichts angeordnet ist. Die zweite Fläche des Prismas fungiert außerdem als Lichtaustrittsfläche für das von dem Reflexionsbeugungsgitter reflektierte und spektral zerlegte Licht.

Das Licht trifft vor der Reflexion in Richtung zur dritten Fläche unter einem Winkel ($\Psi$) auf die zweite Fläche des Prismas auf, der größer ist als der Grenzwinkel der Totalreflexion. Weiterhin ist es vorteilhaft, wenn der Einfallswinkel $\alpha$, unter dem das Licht auf die dritte Fläche auftrifft, größer ist als der Grenzwinkel der Totalreflexion.

Bei einer bevorzugten Ausgestaltung sind die Gitterstege des Reflexionsbeugungsgitters mit einem Material überschichtet, welches einen Brechungsindex $n_H$ aufweist, der größer ist als der Brechungsindex $n_{in}$ des Prismas. Vorzugsweise ist der Brechungsindex $n_H > 2{,}0$. Bei einer weiteren bevorzugten Ausgestaltung weisen die Gitterstege des Reflexionsbeugungsgitters einen Brechungsindex $n_S$ auf, der größer ist als der Brechungsindex $n_{in}$ des Prismas. Vorzugsweise ist $n_S > 2{,}0$.

Durch den hohen Brechungsindex der Gitterstege oder des Materials, mit dem die Gitterstege überschichtet sind, wird eine besonders hohe Beugungseffizienz erzielt. Insbesondere kann auf diese Weise die Differenz der Quadrate der Modenindizes $\Delta K$ deutlich gesteigert werden. Bei Einsatz eines Materials mit Brechungsindex von z.B. $n_S = 2{,}0$ (statt z.B. n= 1,5) als Stegmaterial des Gitters kann der Maximalwert von $\Delta K$ auf $\sim 6/\pi$ gesteigert werden. Dies führt ohne jegliche weitere Maßnahmen zu einer erheblichen Verringerung der nötigen Gittertiefe, sofern man TE- und TM-Polarisation getrennt betrachtet. Weiterhin vergrößert sich vorteilhaft auch die spektrale Bandbreite.

Gemäß einer bevorzugten Ausführungsform weist das Prisma einen Brechungsindex $n_{in} < 1{,}6$ auf. Das Prisma kann insbesondere Kieselglas aufweisen.

Die optische Anordnung wird im Folgenden im Zusammenhang mit den Figuren 1 bis 12 näher erläutert. Hierbei ist ein erfindungsgemäßes Ausführungsbeispiel in den Figuren 4 und 5 dargestellt. Die weiteren Beispiele, die nicht sämtliche Merkmale des Anspruchs 1 aufweisen, sind kein Bestandteil der vorliegenden Erfindung, obwohl sie zum Teil in der Beschreibung als "Ausführungsbeispiele" bezeichnet sind. Sie sind lediglich Beispiele, die für das Verständnis von Teilaspekten der vorliegenden Erfindung hilfreich sind

Es zeigen:

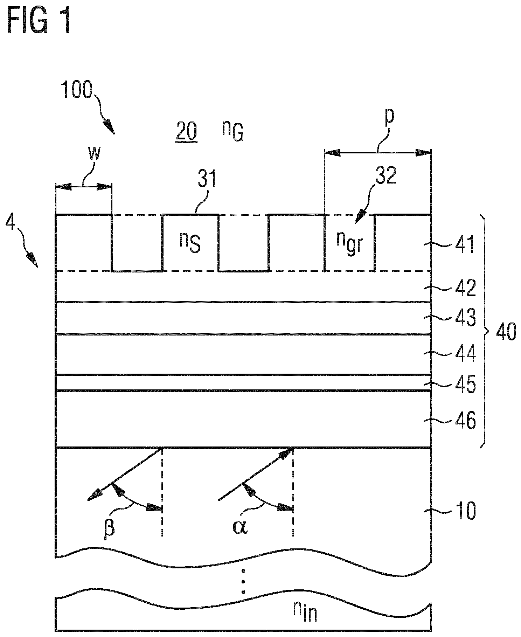

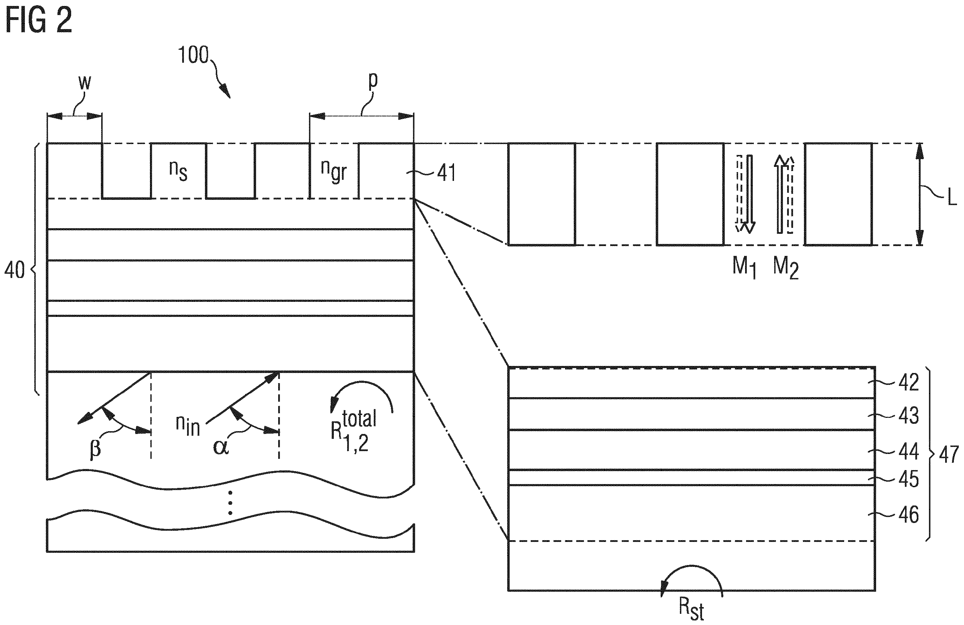

Figuren 1 und 2     eine schematische Darstellung eines Beispiels einer optischen Anordnung zur spektralen Zerlegung von Licht,

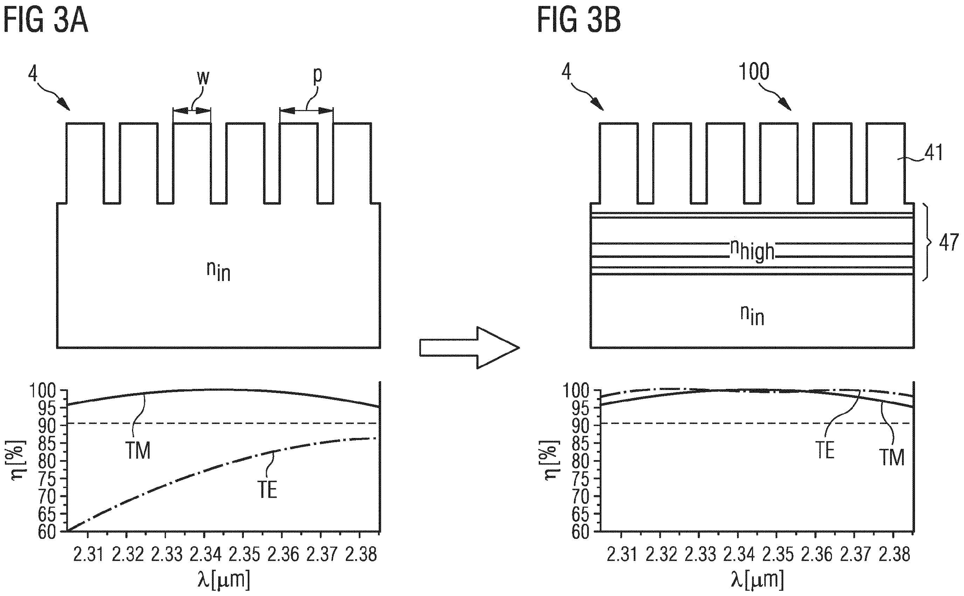

Figur 3A und 3B     eine schematische Darstellung von zwei Beispielen einer optischen Anordnung zur spektralen Zerlegung von Licht und die polarisationsabhängigen Beugungseffizienzen in Abhängigkeit von der Wellenlänge,

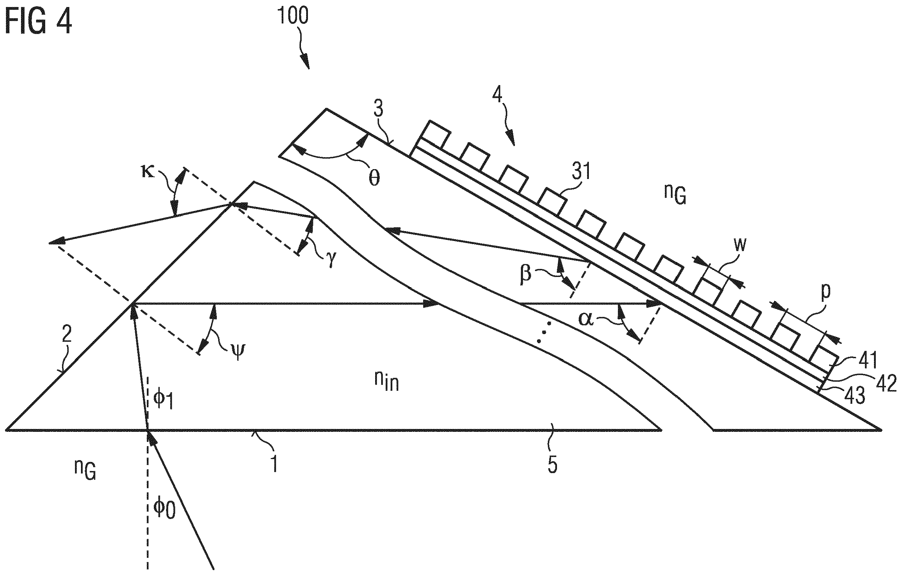

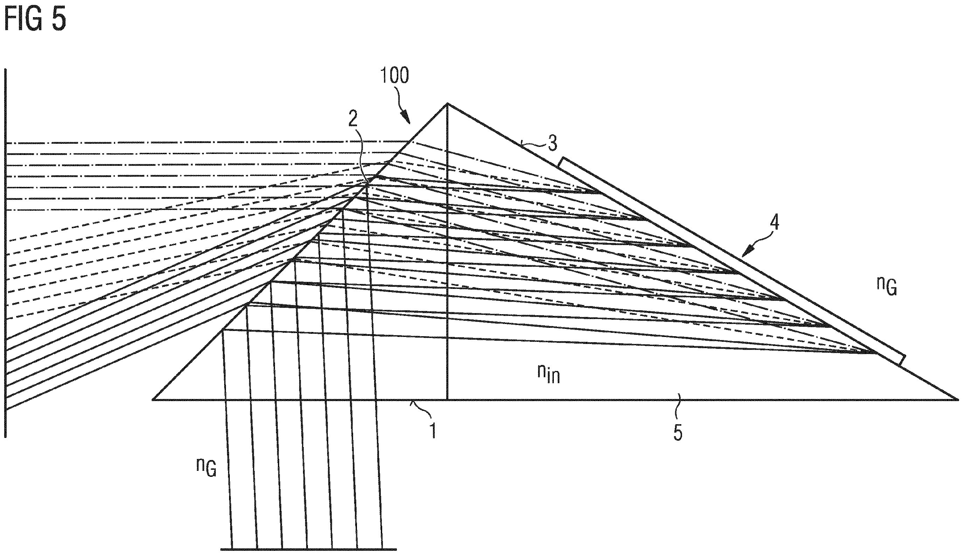

Figuren 4 und 5     jeweils eine schematische Darstellung eines Ausführungsbeispiels einer optischen Anordnung zur spektralen Zerlegung von Licht mit einem Prisma, und

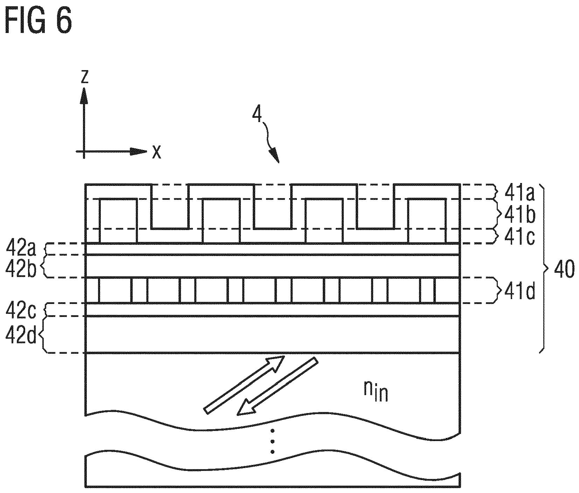

Figuren 6 bis 12     jeweils schematische Darstellungen von weiteren Beispielen der optischen Anordnung zur spektralen Zerlegung von Licht.

Gleiche oder gleich wirkende Elemente sind in den Figuren mit den gleichen Bezugszeichen dargestellt. Die dargestellten Bestandteile sowie die Größenverhältnisse der Bestandteile untereinander sind nicht als maßstabsgerecht anzusehen.

Das in Figur 1 dargestellte Beispiel einer optischen Anordnung 100 zur spektralen Zerlegung von Licht weist ein Reflexionsbeugungsgitter 4 auf, das durch ein Schichtsystem 40 gebildet ist. Das Schichtsystem 40 weist bei dem hier gezeigten Beispiel eine strukturierte Schicht 41 und mehrere unstrukturierte Schichten 42, 43, 44, 45, 46 auf. Das Schichtsystem 40 kann Schichten aus verschiedenen Materialien aufweisen, wobei die Einzelschichten verschiedene Brechungsindices aufweisen können. Die strukturierte Schicht 41 weist in lateraler Richtung eine periodische Struktur mit einer Periode p auf. Die periodische Struktur ist bei dem hier dargestellten Beispiel eine Gitterstruktur, die durch Gitterstege 31 mit einer Stegbreite w und dazwischen angeordneten Gittergräben 32 gebildet ist. Das Verhältnis zwischen Stegbreite w und der Gitterperiode p wird als Füllfaktor $f = w/p$ bezeichnet.

An der Lichteinfallsseite des Reflexionsbeugungsgitters 4 ist ein erstes Medium 10 mit einem Brechungsindex $n_{in}$ angeordnet. Das erste Medium 10 kann zum Beispiel das Material eines transparenten Substrats sein, auf dem das Reflexionsbeugungsgitter 4 angeordnet ist. An einer der Lichteinfallsseite abgewandten Seite des Reflexionsbeugungsgitter 4 ist ein zweites Medium 20 angeordnet, das einen Brechungsindex $n_G$ aufweist, wobei $n_{in} > n_G$ ist. Das zweite Medium 20 kann insbesondere das Umgebungsmedium wie zum Beispiel Luft oder ein Vakuum sein. Bei dem hier dargestellten Beispiel grenzt die durch die Gitterstege 31 gebildete Gitterstruktur direkt an das Umgebungsmedium, z.B. Luft oder Vakuum, an. Somit weisen die Gittergräben 32 des Gitters ebenfalls Luft oder Vakuum mit einem Brechungsindex $n_{gr} \approx 1$ auf.

Das Licht trifft unter einem Einfallswinkel $\alpha$ aus dem ersten Medium 10 auf das Reflexionsbeugungsgitter 4 auf. Um die Anzahl der propagierenden Beugungsordnungen, und damit die Anzahl möglicher Verlustkanäle, zu minimieren, wird eine Konstellation von Einfallswinkel, Brechungsindizes und Gitterperiode gewählt, welche gleichzeitig den Bedingungen (E6) und (E7) genügt. Ohne den Einsatz von reflektierenden Schichten oder Materialien kann durch den Effekt der Totalreflexion sämtliches Licht in Reflexion gebracht werden. Der Einfallswinkel muss entsprechend (E6) zwischen dem Winkel der Totalreflexion und 90° liegen. Im Falle von $n_{in} = 1,45$ und $n_G = 1,0$ bedeutet dies z.B. $44° < \alpha < 90°$.

Weiterhin wird der Einfallswinkel $\alpha$ vorteilhaft so gewählt, dass die Littrowbedingung $n_{in} \sin(\alpha) \approx \lambda/(2p)$ in Näherung erfüllt ist. $\lambda$ bezeichnet hierbei eine beliebige Wellenlänge aus dem Spektralbereich [λ1 ... λ2]. Unter dieser Bedingung, die auch als Littrowkonfiguration bezeichnet wird, kann vorteilhaft eine hohe Beugungseffizienz erzielt werden. Wenn das reflektierte Licht vom einfallenden Licht räumlich getrennt werden soll, ist die Littrowbedingung nicht exakt, sondern nur näherungsweise zu erfüllen, da sich einfallende und gebeugte (reflektierte) Strahlen überlappen.

Die Figur 2 zeigt nochmals die optische Anordnung 100 gemäß Figur 1, wobei die Bestandteile des Reflexionsbeugungsgitters 4 durch eine Explosionsgrafik genauer dargestellt sind. Die beiden fundamentalen Eigenmoden des Gitters, charakterisiert durch ihre effektiven Modenindizes M1 und M2, sowie den entsprechenden Modenreflektivitäten R1, R2 sind schematisch angedeutet.

Im Wesentlichen treten nur zwei relevante Beugungsordnungen (m = 0 und m = -1) im ersten Medium mit der Brechzahl $n_{in}$, und den unstrukturierten Gitterschichten 42, 43, 44, 45, 46 auf. In der strukturierten Schicht 41 breiten sich hauptsächlich (nicht ausschließlich) zwei Gitternormalmoden aus. Im häufigen Fall von spiegelsymmetrischen Brechzahlverteilungen innerhalb der Elementarzelle der Gitterschichten besitzen diese beiden Hauptmoden eine strikt symmetrische und antisymmetrische Form. Dies trifft sowohl auf den Fall der TE- als auch der TM-Polarisation zu.

Eine hohe Beugungseffizienz in die -1. Beugungsordnung in TM-Polarisation kann dadurch erreicht werden, dass die beiden existierenden TM-Eigenmoden $M_1$ und $M_2$ des Gitters nach einem kompletten Umlauf in dem Gitterschichtsystem (40) eine Phasenverschiebung von $(2^*N+1)\pi$ erfahren, d.h.

$$\mathrm{arg}\left(R_1^{total,TM}\right) \approx \mathrm{arg}\left(R_2^{total,TM}\right) + (2N+1)\pi \ .$$

Durch die Tatsache, dass das Gitter in angegebener Konfiguration nur zwei Kanäle besitzt (nämlich die 0. und die -1. Beugungsordnung in Reflexion) können unter Littrowbedingung Beugungseffizienzen von nahezu 100% erreicht werden. Das Berechnen der Moden-Reflektionskoeffizienten $R_{1,2}$ erfolgt im Normalfall mit Hilfe numerischer Verfahren (z.B. RCWA). Im Ergebnis liegen dann die optimalen

Geometrieparameter des Gitters (im Falle eines Binärgitters Gitterstegen sind dies f=w/p und die Gittertiefe L) vor, sodass die Beugungseffizienz in TM-Polarisation für die -1. Beugungsordnung $\eta_{-1}^{TM}$ maximiert wird. Im Allgemeinen wird die Beugungseffizienz in TE-Polarisation $\eta_{-1}^{(TE)}$ für die so ermittelte Gittergeometrie aber deutlich kleiner, also nicht optimal, sein.

Beim Design der optischen Anordnung wird nach der Festlegung der Gitterstruktur der strukturierten Schicht 41 vorzugsweise direkt unterhalb der strukturierten Schicht 41 ein Schichtstapel 47 hinzugefügt, der eine oder mehrere dielektrische Schichten 42, 43, 44, 45, 46 aufweisen kann. Der Schichtstapel 47 weist Reflektivitäten $R_{st}^{TM}(\lambda)$ und $R_{st}^{TE}(\lambda)$ auf, die vorteilhaft derart optimiert werden, dass für Einfall von Licht der Wellenlänge $\lambda$ mit $\lambda_1 \le \lambda \le \lambda_2$ und unter dem Einfallswinkel $\alpha$ folgendes gilt: $|R_{st}^{TM}| \approx 0$ und $|R_{st}^{TE}| > 0$.

Der Schichtstapel 47 fungiert also als Antireflex-Schichtsystem, welches nur in TM-Polarisation funktioniert und für TE-Polarisation weiterhin nichtverschwindende Reflektivitäten aufweist. Das einfachste System, das diese Bedingungen erfüllen kann, ist eine einzelne dielektrische Schicht mit einem Brechungsindex gemäß $n_{st} = n_{in} \tan(\alpha)$, weil der Einfallswinkel $\alpha$ dann gleichzeitig dem Brewsterwinkel zwischen den Materialien $n_{in}$ und $n_{st}$ entspricht.

In Folge ist der Schichtstapel 47 für TM-Polarisation optisch ohne Funktion, da die Reflektivitäten $R_{1/2}^{total,TM}$ der TM-Eigenmoden des Gitters unverändert bleiben. Die vorher erzielte Beugungseffizienz des Gitters bleibt somit in TM-Polarisation (nahezu) erhalten. Gleichzeitig muss der Schichtstapel 47 aber eine nichtverschwindende und auch einstellbare Reflektivität $R_{st}^{TE}(\lambda, \alpha)$ in TE-Polarisation aufweisen. Damit lassen sich die Reflektivitäten $R_{1/2}^{total,TE}$ der TE-Eigenmoden verstimmen und durch Optimieren des Schichtstapels 47, kann nun auch das Effizienzoptimum in TE-Polarisation unter ansonsten gleichbleibender Gittergeometrie erreicht werden und mit dem Optimum in TM-Polarisation in Übereinstimmung gebracht werden.

Bevorzugte Lösungen mit geringer Gittertiefe und hoher Bandbreite der Beugungseffizienz können gefunden werden, wenn die Größen $K_1 = M_1 {}^*M_1$ und $K_2 = M_2 {}^*M_2$ (siehe Gleichungen (E9)) der sich im Gitter ausbreitenden Eigenmoden unterschiedliche Vorzeichen aufweisen, also $K_1 < 0$ und $K_2 > 0$ gilt, bzw. umgekehrt. Unter diesen Bedingungen ist der Phasenversatz zwischen beiden Eigenmoden am größten.

Die Verwendung von hochbrechenden Materialien in strukturierten Schichten vergrößert die Differenz zwischen $K_1$ und $K_2$ bzw. $M_1$ und $M_2$, was wiederum nach Gleichungen (E9) zu kleineren Gittertiefen L und somit breitbandigeren Lösungen führt.

Die hier beschriebene optische Anordnung 100 hat insbesondere folgende Vorteile:

i) Es sind sehr hohe Beugungseffizienzen nahe 100% gleichzeitig für TE- und TM-Polarisation zu erzielen.

ii) Durch gezieltes Einfügen eines dielektrischen AR-Schichtsystems 47, welches nur Wirkung auf die TE-Polarisation, aber geringe Wirkung auf TM-Polarisation hat, kann gezielt die optische Performance in TE- beeinflusst und optimiert werden, ohne die Effizienz in TM-Polarisation maßgeblich zu ändern. Diese Vorgehensweise ist hilfreich bei der Suche nach Gitterstrukturen mit polarisationsunabhängiger Performance.

iii) Durch die Verwendung von angepassten Schichtsystemen 47 und/oder hochbrechenden Gittermaterialien sind moderate Gittertiefen L erreichbar, die zu entsprechender Breitbandigkeit der Gitterperformance führen.

iv) Damit wird eine optische Anordnung 100 zur spektralen Zerlegung von Licht realisiert, welches sich gleichzeitig durch hohe Beugungseffizienz, Polarisationsunabhängigkeit, Breitbandigkeit und hohe Winkeldispersion auszeichnet.

v) Es lassen sich kleine Aspektverhältnisse erzielen, die sich günstig auf die Herstellbarkeit auswirken.

Beispielhaft kann die oben skizzierte Vorgehensweise zum Design der optischen Anordnung zur spektralen Zerlegung von Licht anhand des in den Figuren 3A und 3B dargestellten Beispiels nachvollzogen werden.

Im ersten Schritt wird die Beugungseffizienz des Reflexionsbeugungsgitters 4 ausschließlich für TM-Polarisation optimiert. Dies geschieht i.A. mit Hilfe numerischer Methoden. Figur 3A zeigt das Reflexionsbeugungsgitter und die Beugungseffizienzen für die TE- und die TM-Polarisation. In diesem Beispiel werden Beugungseffizienzen in TM-Polarisation größer 95% im relevanten Spektralbereich erzielt. Allerdings liegt die Beugungseffizienz für TE-Polarisation weit unterhalb von 90%.

Durch das in Fig. 3B dargestellte Einfügen eines Schichtstapels 47 unterhalb des unveränderten Gitters und durch anschließendes Optimieren der Schichtdicken jeder Einzelschicht des Schichtstapels 47 kann die Beugungseffizienz in TE-Polarisation ebenfalls entscheidend beeinflusst werden, ohne die Effizienz in TM-Polarisation zu beeinflussen. Im Ergebnis erhält man ein Gitter mit sehr hoher Beugungseffizienz und einem Polarisationsgrad kleiner 2% im angegebenen Beispiel.

Durch die Optimierung ergeben sich zum Beispiel folgende Daten für die optische Anordnung 100:

| | |
|---|---|
| Wellenlängenbereich: | $\Delta\lambda$ = 2305nm ... 2385nm |
| Substratmaterial: | Kieselglas, $n_{in}$=1,45 |
| Material außerhalb des Gitters: | Luft, $n_G$= 1,0 |
| Material des Gitterstegs: | Kieselglas, $n_S$=1,45 |
| Füllfaktor: | f = 0,55 |
| Material der hochbrechenden Schichten des Schichtstapels: | Titandioxid, n = 2,35 |
| Einfallswinkel $\alpha$ auf das Gitter: | 61° |
| Gitterperiode p: | 935 nm |

Eine besonders vorteilhafte optische Anordnung 100 gemäß dem vorgeschlagenen Prinzip ist in Figur 4 dargestellt. Hierbei handelt es sich um eine dispersive Komponente, die sowohl eine hohe Dispersion realisiert, eine polarisationsunabhängig sehr hohe Beugungseffizienz und eine sehr geringe Nichtlinearität der Dispersion ($A \approx 1$) aufweist.

Diese Ziele werden durch eine Kombination des Reflexionsbeugungsgitters 4 mit einem Prisma 5 erreicht. Die Konfiguration des Reflexionsbeugungsgitters 4 entspricht vorzugsweise einem der zuvor beschriebenen Beispiele. Bei der Anordnung des Reflexionsbeugungsgitters 4 an einem Prisma ist das Material des Prismas 5 gleich dem zuvor beschriebenen ersten Medium an der Lichteinfallsseite des Reflexionsbeugungsgitters 4.

Das Prisma 5 enthält drei optisch wirksame Flächen 1, 2, 3. Das Licht tritt zunächst unter einem Winkel $\Phi_0$ vom umgebenden Medium mit Brechungsindex $n_G$ durch die erste Fläche 1 in das Prisma 5 mit dem Brechungsindex $n_{in}$ ein und wird an der ersten Fläche 1 entsprechend Gleichung (E1) gebrochen. Die zweite Fläche 2 des Prismas 5 ist so zur ersten Fläche 1 angeordnet, dass das einfallende Licht unter einem Winkel $\Psi > \arcsin(n_G/n_{in})$ an der zweiten Fläche 2 totalreflektiert und in Richtung der dritten Fläche 3 abgelenkt wird. An der dritten Fläche 3 ist das Reflexionsbeugungsgitter 4 angeordnet, welches die durch Gleichungen (E7, E11) gegebene Bedingung erfüllt. Die Orientierung der dritten Fläche 3 ist dabei so gewählt, dass für den Einfallswinkel $\alpha$ des Lichtes auf die dritte Fläche 3 die Bedingung der Gleichung (E6) erfüllt ist. Dadurch ist gewährleistet, dass entsprechend Gleichung (E2) an dem Reflexionsbeugungsgitter 4 nur die zwei Beugungsordnungen mit den Ordnungen m = 0 und m = -1 in Reflexion auftreten können. Die Ordnung m = 0 (in Fig. 4 nicht eingezeichnet) wird im Folgenden nicht weiter betrachtet, da sie für die spektrale Aufspaltung des Lichtes nicht genutzt werden kann. Deren Ausbreitungsrichtung ist entsprechend der Gleichung (E2) unabhängig von der Lichtwellenlänge. In Fig. 4 würde diese Beugungsordnung entsprechend des Reflexionsgesetzes an der dritten Fläche 3 reflektiert und auf die erste Fläche 1 umgelenkt.

Die periodische Struktur des Reflexionsbeugungsgitter 4 ist so gestaltet, dass das auf das Gitter einfallende Licht möglichst polarisationsunabhängig mit hoher Effizienz in die Beugungsordnung m = -1 reflektiert wird. Die unterschiedlichen spektralen Komponenten des einfallenden Lichtes werden dabei entsprechend Gleichung (E2) in unterschiedliche Richtungen $\beta(\lambda)$ gebeugt. Die Anordnung ist so gestaltet, dass sich alle Wellenlängen im relevanten Spektralbereich $\Delta\lambda$ zurück in Richtung der zweiten Fläche 2 ausbreiten. Auf diese Fläche treffen diese unter dem Winkel $\gamma$, für den $\sin(\gamma) < n_G/n_{in}$ gilt, so dass keine Totalreflexion auftritt, sondern das Licht durch die zweite Fläche 2 hindurchtreten kann und dabei entsprechend des Brechungsgesetzes (E1) gebrochen wird. Durch die Kombination der Beugung an dem Reflexionsbeugungsgitter 4 an der dritten Fläche 3 mit der Brechung des Lichtes beim Austritt aus dem Prisma 5 durch die zweite Fläche 2 wird erreicht, dass die Nichtlinearität der Dispersion der gesamten optischen Anordnung 100 minimiert wird und damit über den gesamten Spektralbereich $\Delta\lambda$ eine Anamorphosis von $A \approx 1$ erreichbar ist.

Eine hohe polarisationsunabhängige Beugungseffizienz für die Beugungsordnung m = -1 in Reflexion kann mit einem Reflexionsbeugungsgitter 4 gemäß den zuvor beschriebenen Ausgestaltungen erreicht werden. Um die Gesamttransmission der optischen Anordnung 100 zu maximieren, kann auf die erste Fläche 1 und/oder die zweite Fläche 2 eine auf den Wellenlängenbereich $\Delta\lambda$ und den jeweiligen Einfallswinkelbereich abgestimmte Antireflexbeschichtung aufgebracht werden (nicht dargestellt).

Die Gitterstege 31 des Reflexionsbeugungsgitters 4 weisen vorzugsweise einen Brechungsindex $n_S$ auf, der größer ist als der Brechungsindex $n_{in}$ des Prismas 5. Insbesondere kann der Brechungsindex $n_s$ der Gitterstege $n_s > 2$ und der Brechungsindex des Prismas $n_{in} < 1,6$ betragen. Alternativ oder zusätzlich können die Gitterstege 31 des Reflexionsbeugungsgitters 4 mit einem Material überschichtet sein, welches einen Brechungsindex $n_H$ aufweist, der größer ist als der Brechungsindex $n_{in}$ des Prismas 5. In diesem Fall ist vorzugsweise $n_H > 2$.

Die optische Anordnung 100, bei der das Reflexionsbeugungsgitter 4 an dem Prisma 5 angeordnet ist, hat insbesondere folgende Vorteile: Der Einfallswinkel des Lichtes $\Phi_0$ auf die erste Fläche 1 des Prismas 5 ist vom Einfallswinkel $\alpha$ auf das Gitter 4 entkoppelt. Insbesondere kann der Einfallswinkel $\Phi_0$ auf die erste Fläche 1 so gestaltet werden, dass er nahezu in deren Normalenrichtung liegt, wodurch eine hohe polarisationsunabhängige Transmission erreichbar ist. Auch lassen sich für nahezu senkrechten Einfall einfache Antireflexschichten realisieren. Durch die Wahl der Einfallsrichtung auf die mit dem Gitter 4 strukturierte dritte Fläche 3 entsprechend der Bedingung (E6) und die Wahl der Gitterperiode p entsprechend Bedingung (E7, E11) lässt sich eine sehr hohe Beugungseffizienz in nur eine reflektierte Beugungsordnung erreichen. Vorteilhaft ist hierbei die Nutzung eines optischen Materials für das Prisma 5 mit einem nicht zu hohen Brechungsindex. Vorzugsweise sollte für diesen $n_{in} < 1,6$ gelten. Ein geeignetes Material für das Prisma 5 ist insbesondere Kieselglas.

Durch die zusätzliche Brechung des Lichtes an der als Austrittsfläche fungierenden zweiten Fläche 2 verringert sich die Nichtlinearität der Dispersion signifikant und es lassen sich Werte für die Anamorphosis der gesamten optischen Anordnung von $A \approx 1$ erreichen.

Der Strahlengang in einer optischen Anordnung 100 mit dem Prisma 5 und dem Reflexionsbeugungsgitter 4 ist für ein Ausführungsbeispiel in Fig. 5 dargestellt. Die optische Anordnung 100 kann insbesondere folgende Parameter aufweisen:

| | |
|---|---|
| Wellenlängenbereich: | $\Delta\lambda$ = 2305nm ... 2385nm |
| Prismenmaterial: | Kieselglas, $n_{in}$ = 1,45 |
| Material außerhalb des Prismas: | Luft, $n_G$ = 1,0 |
| Einfallswinkel auf die erste Fläche 1: | 7,2° |
| Einfallswinkel auf das Gitter: | 54° |
| Gitterperiode: | p = 935 nm |
| Winkel zwischen Fläche 1 und Fläche 2: | 46° |
| Winkel zwischen Fläche 2 und Fläche 3: | 105° |

Mit diesen Parametern wird eine Gesamtdispersion von 18° über den genannten Spektralbereich realisiert. Die Anamorphosis beträgt dabei A = 1,1.

In den folgenden Figuren 6 bis 12 sind weitere mögliche Ausgestaltungen des Reflexionsbeugungsgitters gezeigt. Diese Ausgestaltungen lassen sich insbesondere mit der Anordnung des Reflexionsbeugungsgitters auf einem Prisma, wie in den Figuren 4 und 5 gezeigt, kombinieren.

Figur 6 zeigt schematisch ein Reflexionsbeugungsgitter 4, das ein Schichtsystem 40 aus strukturierten Schichten 41a, 41b, 41c, 41d und unstrukturierten Schichten 42a, 42b, 42c, 42d aufweist. Das Schichtsystem 40 kann im Allgemeinen aus einer beliebigen Anzahl strukturierter sowie unstrukturierter Schichten zusammengesetzt sein. Als Schicht wird ein Bereich bezeichnet, in dem der Brechungsindex $n(x)$ (x bezeichnet die Koordinatenachse entlang der Schichten) unabhängig von der z-Koordinate (z bezeichnet die Koordinatenachse senkrecht zu den Schichten) ist.

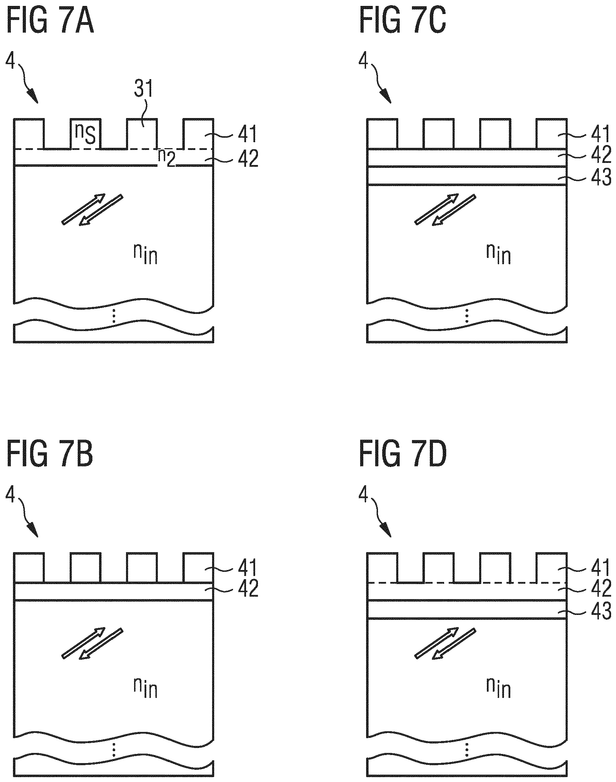

Die Figuren 7A bis 7D zeigen schematisch vier Beispiele von Reflexionsbeugungsgittern 4, die jeweils ein binäre Gitterstruktur aufweisen, d.h. eine Gitterstruktur, die nur zwei Höhenstufen aufweist. Die binäre Gitterstruktur kann insbesondere eine Struktur aus abwechselnden Gitterstegen und Gittergräben sein, deren Höhenprofil einer periodischen Rechteckfunktion entspricht. Das Material in den Gittergräben entspricht bei den hier dargestellten Beispielen jeweils dem Umgebungsmaterial auf der lichtabgewandten Seite.

Bei den Beispielen der Figuren 7A und 7B weist das Reflexionsbeugungsgitter 4 jeweils genau zwei Schichten auf, nämlich eine strukturierte Schicht 41 und eine unstrukturierte Schicht 42. Die unstrukturierte Schicht 42 ist an der Lichteinfallseite und die strukturierte Schicht 41 an der lichtabgewandten Seite angeordnet. Bei dem Beispiel der Figur 7A weisen die Gitterstege 31 und die unstrukturierte Schicht 42 vorteilhaft jeweils das gleiche Material auf. Insbesondere kann die unstrukturierte Schicht 42 einen Brechungsindex $n_2$ aufweisen, der gleich dem Brechungsindex $n_S$ der Gitterstege 31 ist. Besonders bevorzugt weisen die Gitterstege 31 und die unstrukturierte Schicht 42 jeweils ein hochbrechendes Material mit einem Brechungsindex > 2 auf, so dass $n_2 > 2$ und $n_S > 2$ gilt.

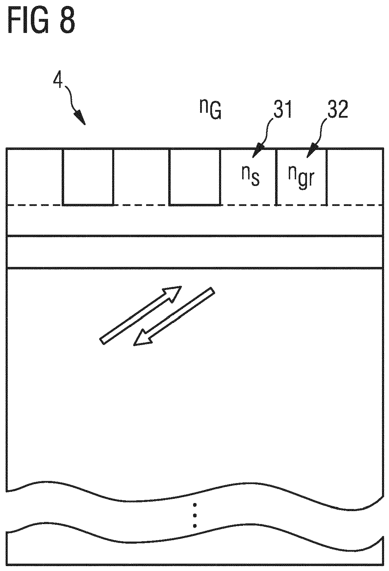

Figur 8 zeigt schematisch ein Reflexionsbeugungsgitter 4, das eine sogenannte verfüllte binäre Gitterstruktur aufweist. Bei dieser Ausgestaltung ist in den Gittergräben 32 ein Material angeordnet, das nicht dem Umgebungsmaterial auf der lichtabgewandten Seite entspricht. Das Material in den Gittergräben 32 kann einen Brechungsindex $n_{gr}$ aufweisen, der ungleich dem Brechungsindex $n_G$ des Umgebungsmaterials und ungleich dem Brechungsindex $n_s$ der Gitterstege 31 ist.

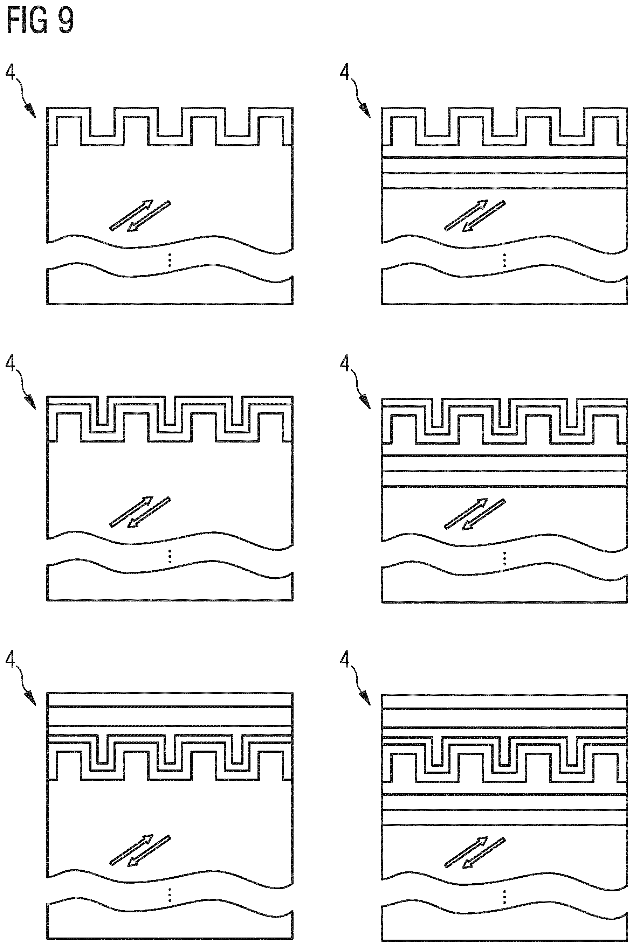

Figur 9 zeigt schematisch mehrere Beispiele von Reflexionsbeugungsgittern 4, die überschichtete binäre Gitterstrukturen aufweisen. Die Gitterstruktur kann mit einer oder mit mehreren Schichten überschichtet sein. Hierbei kann die mindestens eine Schicht die Gitterstruktur konform bedecken oder die Gittergräben auffüllen. Bevorzugt ist die Gitterstruktur mit einem Material überschichtet, welches einen Brechungsindex $n_H$ aufweist, der größer ist als der Brechungsindex $n_{in}$ des ersten Medium, beispielsweise eines Prismas. In diesem Fall ist vorzugsweise $n_H > 2$.

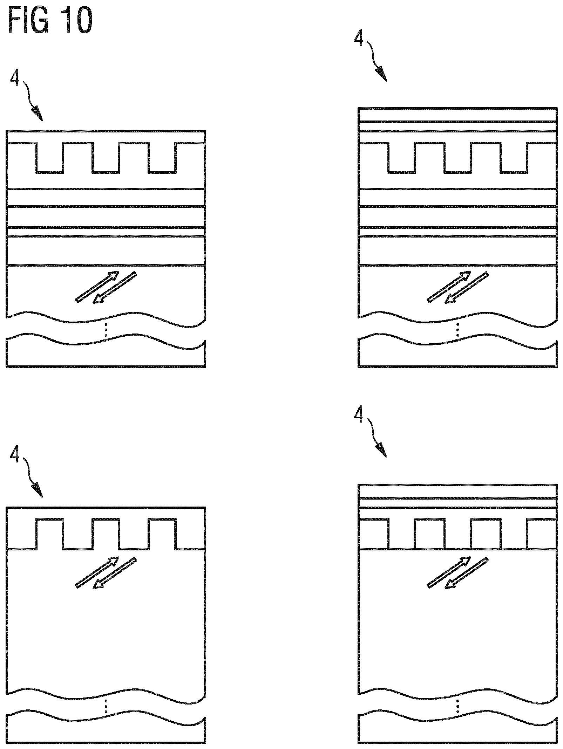

Figur 10 zeigt schematisch vier verschiedene Beispiele von Reflexionsbeugungsgittern 4, die verfüllte Gitterstrukturen aufweisen. Dargestellt sind verschiedene Konfigurationen, bei denen mindestens eine unstrukturierte Schicht oder ein Schichtstapel aus unstrukturierten Schichten unter der strukturierten Schicht, d.h. an der Lichteinfallsseite, über oder beidseitig der strukturierten Schicht angeordnet sind.

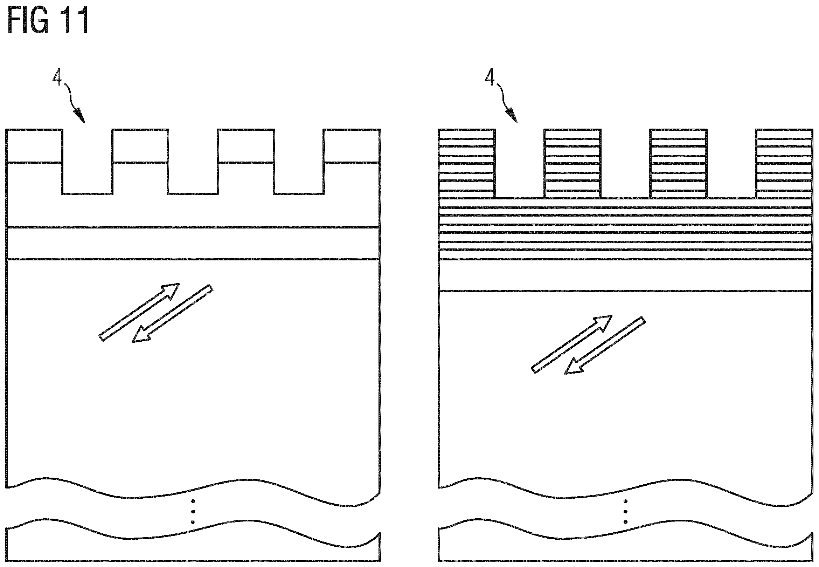

Figur 11 zeigt schematisch zwei Beispiele von Reflexionsbeugungsgittern 4, die binäre mehrlagige Gitterstrukturen aufweisen. Bei diesen Beispielen ist die Gitterstruktur in einem Schichtstapel aus mindestens zwei oder mehr Schichten ausgebildet.

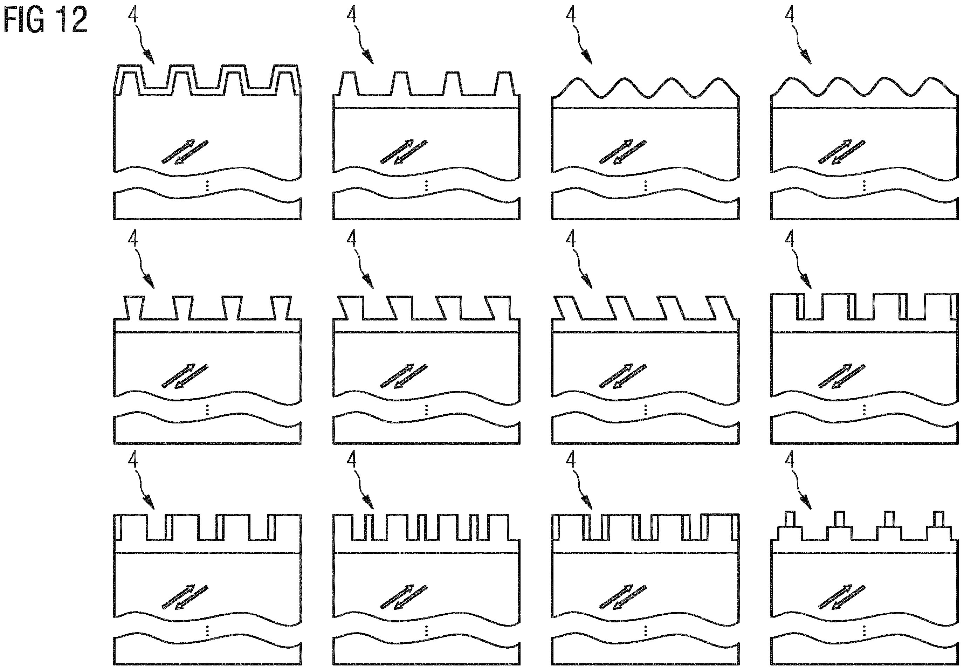

Figur 12 zeigt schematisch mehrere weitere Beispiele von Reflexionsbeugungsgittern 4, die diverse mögliche Geometrien aufweisen. Bei diesen Beispielen weicht die Gitterstruktur von binären Gitterstrukturen ab und/oder ist aus verschiedenen Materialien gebildet. Die in Figur 12 dargestellten Gittergeometrien sind auch mit den zuvor in den Figuren 1 und 7 bis 11 dargestellten Schichten oder Schichtenstapeln aus unstrukturierten Schichten kombinierbar.

**Patentansprüche**

1. Optische Anordnung (100) zur spektralen Zerlegung von Licht mit Wellenlängen $\lambda$ aus einem Spektralbereich $\lambda_1 \leq \lambda \leq \lambda_2$, umfassend ein Reflexionsbeugungsgitter (4),
   wobei

   - an einer Lichteinfallsseite des Reflexionsbeugungsgitters (4) ein erstes Medium (10) mit einem Brechungsindex $n_{in}$ angeordnet ist, und an einer der Lichteinfallsseite abgewandten Seite des Reflexionsbeugungsgitters (4) ein zweites Medium (20) mit einem Brechungsindex $n_G$ angeordnet ist, wobei $n_{in} > n_G$ ist,
   - die optische Anordnung so eingerichtet ist, dass Licht unter einem Einfallswinkel $\alpha$ aus dem ersten Medium auf das Reflexionsbeugungsgitter (4) auftrifft, wobei die Bedingung $\sin(\alpha) > n_G / n_{in}$ erfüllt ist, und
   - das Reflexionsbeugungsgitter (4) ein Schichtsystem (40) mit mindestens einer unstrukturierten Schicht (42) und mindestens einer strukturierten Schicht (41) aufweist, wobei die mindestens eine strukturierte Schicht (41) in lateraler Richtung eine periodische Struktur mit einer Periode p aufweist, wobei die Periode p die Bedingungen

$$p < \lambda \; / \; [n_{in}*\sin(\alpha) \; + \; n_G]$$

   und

$$p > \lambda \; / \; [n_{in}*\sin(\alpha) \; + \; n_{in}]$$

   erfüllt,
   - die mindestens eine strukturierte Schicht (41), welche die Periode p aufweist, an einer der Lichteinfallsseite abgewandten Seite des Reflexionsbeugungsgitters (4) angeordnet ist,
   - das erste Medium durch ein Prisma (5) gebildet ist,
   - das Prisma eine erste Fläche (1), eine zweite Fläche (2) und eine dritte Fläche (3) aufweist, und
   - die erste Fläche (1) des Prismas (5) eine Lichteintrittsfläche der optischen Anordnung (100) ist, **dadurch gekennzeichnet, dass**
   - die zweite Fläche (2) des Prismas (5) zur Reflexion von einfallendem Licht zur dritten Fläche (3) vorgesehen ist,
   - das Reflexionsbeugungsgitter (4) zur spektralen Zerlegung des einfallenden Lichts an der dritten Fläche (3) des Prismas (5) angeordnet ist,
   - die zweite Fläche (2) als Lichtaustrittsfläche des von dem Reflexionsbeugungsgitter (4) reflektierten und spektral zerlegten Lichts vorgesehen ist, und

- das Licht vor der Ablenkung zur dritten Fläche (3) unter einem Winkel ($\Psi$) auf die zweite Fläche (2) auftrifft, der größer ist als der Grenzwinkel der Totalreflexion.

**2.** Optische Anordnung nach Anspruch 1,
wobei das Reflexionsbeugungsgitter (4) mehrere strukturierte Schichten (41) aufweist, und wobei alle strukturierten Schichten an einer der Lichteinfallsseite abgewandten Seite angeordnet sind.

**3.** Optische Anordnung nach einem der vorhergehenden Ansprüche,
wobei für die Quadrate der effektiven Modenindizes $K_1$, $K_2$ in der mindestens einen strukturierten Schicht (41) eine der folgenden drei Bedingungen erfüllt ist:

$K_1 \leq 0$ und $K_2 > 0$, oder
$K_2 \leq 0$ und $K_1 > 0$.

**4.** Optische Anordnung nach einem der vorhergehenden Ansprüche,
wobei das Reflexionsbeugungsgitter (4) aus einer unstrukturierten Schicht (42) an der Lichteinfallsseite und mindestens einer strukturierten Schicht (41) an einer der Lichteinfallsseite abgewandten Seite besteht.

**5.** Optische Anordnung nach einem der vorhergehenden Ansprüche,
wobei die periodische Struktur der strukturierten Schicht (41) ein Gitterprofil aufweist, das nicht mehr als zwei Höhenstufen aufweist.

**6.** Optische Anordnung nach Anspruch 5,
wobei die periodische Struktur der strukturierten Schicht (41) Gitterstege (31) mit einem Brechungsindex $n_S$ und Gittergräben (32) aufweist, wobei die Gittergräben (32) Luft oder Vakuum aufweisen,
und wobei die Gitterstege (31) und die unstrukturierte Schicht (42) aus dem gleichen Material mit einem Brechungsindex $n_S = n_2 > n_{in}$ gebildet sind.

**7.** Optische Anordnung nach einem der vorhergehenden Ansprüche,
wobei der Einfallswinkel ($\alpha$), unter dem das Licht auf die dritte Fläche (3) auftrifft, größer ist als der Grenzwinkel der Totalreflexion.

**8.** Optische Anordnung nach einem der vorhergehenden Ansprüche, wobei ein Einfallswinkel ($\gamma$), unter dem das von dem Reflexionsbeugungsgitter (4) reflektierte Licht wieder auf die zweite Fläche (2) auftrifft, kleiner ist als der Grenzwinkel der Totalreflexion.

**9.** Optische Anordnung nach einem der vorhergehenden Ansprüche,
wobei Gitterstege (31) des Reflexionsbeugungsgitters (4) mit einem Material überschichtet sind, welches einen Brechungsindex $n_H$ aufweist, der größer ist als der Brechungsindex $n_{in}$ des Prismas (5).

**10.** Optische Anordnung nach einem der vorhergehenden Ansprüche,
wobei Gitterstege (31) des Reflexionsbeugungsgitters (4) einen Brechungsindex $n_S$ aufweisen, der größer ist als der Brechungsindex $n_{in}$ des Prismas (5).

**11.** Optische Anordnung nach einem der Ansprüche 9 oder 10, wobei der Brechungsindex $n_s$ der Gitterstege (31) $n_s > 2$ beträgt.

**12.** Optische Anordnung nach einem der vorhergehenden Ansprüche,
wobei das Prisma (5) einen Brechungsindex $n_{in} < 1{,}6$ aufweist.

**Claims**

**1.** Optical arrangement (100) for the spectral decomposition of light with wavelengths $\lambda$ in a spectral range $\lambda_1 \leq \lambda \leq \lambda_2$, the optical arrangement comprising a reflection diffraction grating (4),
wherein

- a first medium (10) with a refractive index $n_{in}$ is arranged on a light incidence side of the reflection diffraction grating (4), and a second medium (20) with a refractive index $n_G$ is arranged on a side of the reflection diffraction grating (4) that faces away from the light incidence side, with $n_{in} > n_G$,

- the optical arrangement is configured in such a way that light impinges on the reflection diffraction grating (4) from the first medium at an angle of incidence $\alpha$, wherein the condition $\sin(\alpha) > n_G/n_{in}$ is satisfied, and
- the reflection diffraction grating (4) comprises a layer system (40) with at least one unstructured layer (42) and at least one structured layer (41), the at least one structured layer (41) having a periodic structure with a period p in the lateral direction, wherein the period p meets the following conditions:

$$p < \lambda \ / \ [n_{in} {}^* \sin(\alpha) \ + \ n_G]$$

and

$$p > \lambda \ / \ [n_{in} {}^* \sin(\alpha) \ + \ n_{in}],$$

- the at least one structured layer (41) with the period p is arranged on a side of the reflection diffraction grating (4) that faces away from the light incidence side,
- the first medium is formed by a prism (5),
- the prism comprises a first surface (1), a second surface (2) and a third surface (3), and
- the first surface (1) of the prism (5) is a light input surface of the optical arrangement (100),

**characterized in that**

- the second surface (2) of the prism (5) is configured to reflect incident light to the third surface (3),
- the reflection diffraction grating (4) for the spectral decomposition of the incident light is arranged on the third surface (3) of the prism (5),
- the second surface (2) is a light output surface of the light that is reflected and spectrally decomposed by the reflection diffraction grating (4), and
- before being deflected towards the third surface (3), the light is incident on the second surface (2) at an angle ($\Psi$) which is greater than a critical angle of total internal reflection.

2. Optical arrangement according to claim 1,
   wherein the reflection diffraction grating (4) comprises a plurality of structured layers (41), and wherein all structured layers are arranged on a side that faces away from the light incidence side.

3. Optical arrangement according to any one of the preceding claims,
   wherein one of the following three conditions is satisfied for squares of effective mode indices $K_1$, $K_2$ in the at least one structured layer (41):

   $K_1 \leq 0$ and $K_2 > 0$, or
   $K_2 \leq 0$ and $K_1 > 0$.

4. Optical arrangement according to any one of the preceding claims,
   wherein the reflection diffraction grating (4) consists of an unstructured layer (42) on the light incidence side and at least one structured layer (41) on a side that faces away from the light incidence side.

5. Optical arrangement according to any one of the preceding claims,
   wherein the periodic structure of the structured layer (41) has a grating profile which has no more than two levels.

6. Optical arrangement according to claim 5,
   wherein the periodic structure of the structured layer (41) has grating bars (31) with a refractive index $n_S$ and grating trenches (32), wherein the grating trenches (32) contain air or a vacuum,
   and wherein the grating bars (31) and the unstructured layer (42) are formed from the same material having a refractive index $n_S = n_2 > n_{in}$.

7. Optical arrangement according to any one of the preceding claims,

wherein the angle of incidence ($\alpha$) at which the light impinges on the third surface (3) is greater than a critical angle of total internal reflection.

8. Optical arrangement according to any one of the preceding claims, wherein an angle of incidence ($\gamma$) at which the light that is reflected by the reflection diffraction grating (4) impinges on the second surface (2) again is less than a critical angle of total internal reflection.

9. Optical arrangement according to any one of the preceding claims, wherein grating bars (31) of the reflection diffraction grating (4) are coated with a material having a refractive index $n_H$ that is greater than the refractive index $n_{in}$ of the prism (5).

10. Optical arrangement according to any one of the preceding claims, wherein grating bars (31) of the reflection diffraction grating (4) have a refractive index $n_S$ that is greater than the refractive index $n_{in}$ of the prism (5).

11. Optical arrangement according to one of claims 9 or 10, wherein the refractive index $n_S$ of the grating bars (31) is $n_S > 2$.

12. Optical arrangement according to any one of the preceding claims, wherein the prism (5) has a refractive index $n_{in} < 1.6$.

**Revendications**

1. Système optique (100) destiné à la décomposition spectrale de la lumière de longueurs d'ondes $\lambda$ d'une plage spectrale $\lambda_1 \leq \lambda \leq \lambda_2$, comprenant un réseau de diffraction en réflexion (4),

   - un premier support (10) d'un indice de réfraction $n_{in}$ étant agencé sur un côté d'incidence de la lumière dudit réseau de diffraction en réflexion (4), et un deuxième support (20) d'un indice de réfraction $n_G$ étant agencé sur un deuxième côté tourné dans la direction opposée du côté d'incidence de la lumière, $n_{in}$ étant supérieur à $n_G$,
   - le système optique étant conçu de sorte que la lumière tombe dans un angle d'incidence $\alpha$, à partir du premier support sur le réseau de diffraction en réflexion (4), la condition $\sin(\alpha) > n_G / n_{in}$ étant remplie, et
   - le réseau de diffraction en réflexion (4) présentant un système de couches (40) doté d'au moins une couche non structurée (42) et d'au moins une couche structurée (41), ladite au moins une couche structurée (41) présentant dans le sens latéral une structure périodique d'une période p, la période p remplissant les conditions

$$p < \lambda \ / \ [n_{in} {*} \sin(\alpha) + n_G]$$

   et

$$p > \lambda \ / \ [n_{in} {*} \sin(\alpha) + n_{in}],$$

   - ladite au moins une couche structurée (41) qui présente la période p étant agencée sur un côté du réseau de diffraction en réflexion (4) tourné dans la direction opposée au côté d'incidence de la lumière,
   - le premier support étant constitué d'un prisme (5),
   - ledit prisme présentant une première face (1), une deuxième face (2) et une troisième face (3), et
   - ladite première face (1) du prisme (5) étant une face d'entrée de la lumière du système optique (100),

   **caractérisé en ce que**

   - ladite deuxième face (2) du prisme (5) est prévue pour réfléchir la lumière incidente vers la troisième face (3),
   - le réseau de diffraction en réflexion (4) destiné à la décomposition spectrale de la lumière incidente est agencé sur la troisième face (3) du prisme (5),
   - la deuxième face (2) est prévue en tant que face de sortie de lumière de la lumière réfléchie par le réseau de diffraction en réflexion (4) et décomposée spectralement, et
   - la lumière, avant d'être déviée vers la troisième face (3), tombe sur la deuxième face (2) dans un angle ($\Psi$)

qui est supérieur à l'angle limite de réflexion totale.

2. Système optique selon la revendication 1,
le réseau de diffraction en réflexion (4) présentant plusieurs couches structurées (41), et toutes les couches structurées étant agencées sur un côté tourné dans la direction opposée au côté d'incidence de la lumière.

3. Système optique selon l'une quelconque des revendications précédentes,
une des trois conditions suivantes étant remplies pour les carrés des indices effectifs de mode $K_1$, $K_2$ dans ladite au moins une couche structurée (41) :

$K_1 \leq 0$ et $K_2 > 0$, ou
$K_2 \leq 0$ et $K_1 > 0$.

4. Système optique selon l'une quelconque des revendications précédentes,
le réseau de diffraction en réflexion (4) se composant d'une couche non structurée (42) sur le côté d'incidence de la lumière et d'au moins une couche structurée (41) sur un côté tourné dans la direction opposée au côté d'incidence de la lumière.

5. Système optique selon l'une quelconque des revendications précédentes,
la structure périodique de la couche structurée (41) présentant un profil en réseau qui ne présente pas plus de deux étages de hauteur.

6. Système optique selon la revendication 5,
la structure périodique de la couche structurée (41) présentant des passerelles de réseau (31) d'un indice de réfraction $n_s$ et des fosses de réseau (32), lesdites fosses de réseau (32) présentant de l'air ou du vide,
et les passerelles de réseaux (31) et la couche non structurée (42) étant constituées du même matériau d'un indice de réfraction $n_s = n_2 > n_{in}$.

7. Système optique selon l'une quelconque des revendications précédentes,
l'angle d'incidence ($\alpha$) dans lequel la lumière tombe sur la troisième face (3) étant supérieur à l'angle limite de la réflexion totale.

8. Système optique selon l'une quelconque des revendications précédentes,
un angle d'incidence ($\gamma$), dans lequel la lumière réfléchie par le réseau de diffraction en réflexion (4) retombe sur la deuxième face (2), étant inférieur à l'angle limite de la réflexion totale.

9. Système optique selon l'une quelconque des revendications précédentes,
des passerelles de réseau (31) du réseau de diffraction en réflexion (4) étant recouvertes d'un matériau qui présente un indice de réfraction $n_H$ qui est supérieur à l'indice de réfraction $n_{in}$ du prisme (5).

10. Système optique selon l'une quelconque des revendications précédentes,
des passerelles de réseau (31) du réseau de diffraction en réflexion (4) présentant un indice de réfraction $n_s$ qui est supérieur à l'indice de réfraction $n_{in}$ du prisme (5).

11. Système optique selon l'une quelconque des revendications 9 ou 10,
l'indice de réfraction $n_s$ des passerelles de réseau (31) étant $n_s > 2$.

12. Système optique selon l'une quelconque des revendications précédentes,
le prisme (5) présentant un indice de réfraction $n_{in} < 1,6$.

FIG 1

FIG 2

FIG 3A

FIG 3B

FIG 4

FIG 5

FIG 6

FIG 7A

4

31

$n_S$

$n_2$

41

42

$n_{in}$

FIG 7C

4

41

42

43

$n_{in}$

FIG 7B

4

41

42

$n_{in}$

FIG 7D

4

41

42

43

$n_{in}$

FIG 8

$n_G$    31    32

4

$n_S$   $n_{gr}$

FIG 9

# FIG 10

FIG 11

4

4

EP 3 267 230 B1

FIG 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102016112504

- US 20150309220 A1